# EUROPÄISCHE PATENTSCHRIFT

(11) **EP 1 682 372 B1**
(45) Veröffentlichungstag und Bekanntmachung des Hinweises auf die Patenterteilung: **05.11.2008**
(21) Anmeldenummer: 04818405.5
(22) Anmeldetag: 15.11.2004
(51) Int. Cl.: B60K 6/445, B60K 6/48, B60K 6/543, B60W 10/02, B60W 10/06, B60W 10/08, B60W 10/10, B60W 10/26, B60W 20/00

(54) **HYBRIDANTRIEBSSYSTEM FÜR EIN KRAFTFAHRZEUG**
HYBRID DRIVE SYSTEM FOR A MOTOR VEHICLE
SYSTEME D'ENTRAINEMENT HYBRIDE POUR VEHICULE AUTOMOBILE

(30) Priorität: 14.11.2003 DE 10353256
(43) Veröffentlichungstag der Anmeldung: 26.07.2006
(73) Patentinhaber: Bayerische Motoren Werke Aktiengesellschaft, 80809 München (DE)
(72) Erfinder: BARSKE, Heiko, 82229 Seefeld (DE)
(86) Internationale Anmeldenummer: PCT/EP2004/012938
(87) Internationale Veröffentlichungsnummer: WO 2005/047039

(56) Entgegenhaltungen:
- EP-A- 0 693 392
- EP-A- 0 759 370
- EP-A- 0 930 193
- EP-A- 1 177 930
- EP-A- 1 199 205
- EP-A- 1 302 353
- DE-A1- 19 624 252
- US-A- 5 406 126
- US-A- 6 018 198
- US-A1- 2003 010 548
- US-B1- 6 201 312
- PATENT ABSTRACTS OF JAPAN Bd. 1998, Nr. 11, 30. September 1998 (1998-09-30) & JP 10 155203 A (NISSAN MOTOR CO LTD), 9. Juni 1998 (1998-06-09)

## Beschreibung

Die Erfindung betrifft ein Hybridantriebssystem für ein Kraftfahrzeug.

Hybridantriebssysteme gewinnen wegen der zunehmenden Bedeutung verbesserter Umweltverträglichkeit von Kraftfahrzeugen an Bedeutung. Sie erlauben, einen Betrieb der Brennkraftmaschine in Bereichen mit besonders hohem spezifischen Kraftstoffverbrauch zu vermeiden. Solche Betriebsbereiche sind sowohl mit hohem streckenbezogenen Kraftstoffverbrauch des Fahrzeuges als auch mit hohem Schadstoffausstoß verbunden.

Hybridantriebssysteme sind beispielsweise aus der DE 29 43 554 A1, dem japanischen offengelegten Gebrauchsmuster 2-7702, der WO 00/15455 und der US 5,934,395 bekannt.

In der US 2003/010548 A1 ist ein Hybridantriebssystem beschrieben, in das eine Stopp-Startfunktion für die Brennkraftmaschine integriert ist. Im Stoppzustand wird die Brennkraftmaschine von der Elektromaschine und dem Getriebe durch Öffnung der ersten Kupplung beim Vorliegen vorbestimmter Bedingungen, beispielsweise wenn das Fahrzeug in einer Schlange mit anderen Fahrzeugen abbremst oder wenn es an einer Ampel hält, getrennt. Während des Stoppzustandes wird die Brennkraftmaschine abgeschaltet. Dem Stoppzustand folgt ein Startzustand als ein Ergebnis des Auftretens vorbestimmter Bedingungen, beispielsweise der Betätigung des Fahrpedals durch einen Fahrer. Während des Startzustandes wird die Brennkraftmaschine mittels Elektromaschine, die dann als Motor arbeitet, angelassen und dann mit dem Getriebe verbunden.

Genauer wird im Startzustand die als Motor arbeitende Elektromaschine mit dem Getriebe verbunden, das sich in einem niedrigen Gang, vorzugsweise im ersten Gang, befindet. Bei Beginn des Startzustandes ist die erste Kupplung geöffnet und die zweite Kupplung bei dem vorbestimmten im Getriebe eingelegten Gang geschlossen. In diesem Zustand dient allein die Elektromaschine zum Vortrieb des Fahrzeugs. Wenn vorbestimmte Betriebszustände, die ein Anlassen der Brennkraftmaschine erfordern, auftreten, wird die zweite Kupplung geöffnet, der Gang mit niedriger Übersetzung ausgelegt und ein Gang mit höherer Übersetzung eingelegt und gleichzeitig, d.h. bei offener zweiter Kupplung, die erste Kupplung geschlossen, um die Brennkraftmaschine anzulassen. Somit wird die Brennkraftmaschine angelassen, während die Elektromaschine vom Getriebe getrennt ist und deren Drehmoment somit vollständig zum Anlassen der Elektromaschine zur Verfügung steht. Anschließend wird, nachdem die Brennkraftmaschine angelassen ist, die zweite Kupplung geschlossen.

Insgesamt wird bei dem bekannten Hybridantriebssystem somit das Anlassen der Brennkraftmaschine durch einen Gangwechsel "kaschiert", so dass das Anlassen der Brennkraftmaschine nicht gesondert als Ruck spürbar ist, sondern nur die übliche Drehmomentunterbrechung bei einem Hochschalten erfolgt, die für den Fahrer gewohnt ist.

Aus der US-A-6 018 198 ist ein Hybridantriebssystem bekannt, bei dem die Elektromaschine während des Anlassens der Brennkraftmaschine, d.h. während des Schließens der ersten Kupplung, mit zusätzlichem Antriebsmoment betrieben wird.

Aus der EP 0 930 193 A2 ist ein Antriebssystem für ein Kraftfahrzeug bekannt, das ausgehend von der Brennkraftmaschine in deren Abtriebsrichtung eine erste Kupplung, eine als Starter-Generator betreibbare Elektromaschine, eine zweite Kupplung, eine Antriebswelle, ein Getriebe und eine Abtriebswelle, die über ein Differenzial mit Antriebsrädern verbunden ist, enthält. Weiter ist eine Steuervorrichtung vorgesehen, die Rollphasen des Kraftfahrzeugs mit abgeschaltetem Antriebsaggregat erkennt und in derartigen Phasen die Elektromaschine über die zweite Kupplung und das Getriebe mit den sich drehenden Antriebsrädern verbindet und permanent ein Übersetzungsverhältnis des Getriebes derart einstellt, dass sich eine vorbestimmte Abtriebswellendrehzahl ergibt. Das Getriebe ist ein Getriebe mit kontinuierlich veränderbarer Übersetzung. Durch das Aufrechterhalten einer vorbestimmten Abtriebswellendrehzahl kann eine vorbestimmte Stromerzeugung durch die Elektromaschine aufrechterhalten werden. Das Antriebssystem wird als Schwung-Nutz-Automatik bezeichnet, wobei die Schwungnutzung darin besteht, dass während Roll- oder Bremsphasen des Fahrzeugs die Brennkraftmaschine abgetrennt werden kann und mit der Elektromaschine die Batterie nachgeladen werden kann.

Der Erfindung liegt die Aufgabe zugrunde, ein gattungsgemäßes Hybridantriebssystem derart weiterzubilden, dass ein hoher Fahrkomfort erzielt wird und auch das Anlassen der Brennkraftmaschine mittels der Elektromaschine zumindest weitgehend ruckfrei erfolgt.

Diese Aufgabe wird mit den Merkmalen des Anspruchs 1 gelöst.

Die Unteransprüche sind auf vorteilhafte Ausführungsformen und Weiterbildungen des erfindungsgemäßen Hybridantriebssystems gerichtet.

Die Erfindung wird im Folgenden anhand schematischer Zeichnungen beispielsweise und mit weiteren Einzelheiten erläutert.

Es stellen dar:
- Fig. 1: ein Verbrauchskennfeld, anhand dessen ein Prinzip eines Hybridantriebssystems erläutert wird;
- Fig. 2: eine graphische Darstellung zur Erläuterung einer vorteilhaften Ladestrategie,
- Fig. 3 bis 5: Beispiele von in ihrem Aufbau an sich bekannten Hybridantriebssystemen, wobei das System gem. Fig. 3 erfindungsgemäß ausgestaltbar ist, und
- Fig. 6: ein Flussdiagramm zur Erläuterung einer beispielhaften Funktion eines Hybridantriebssystems.

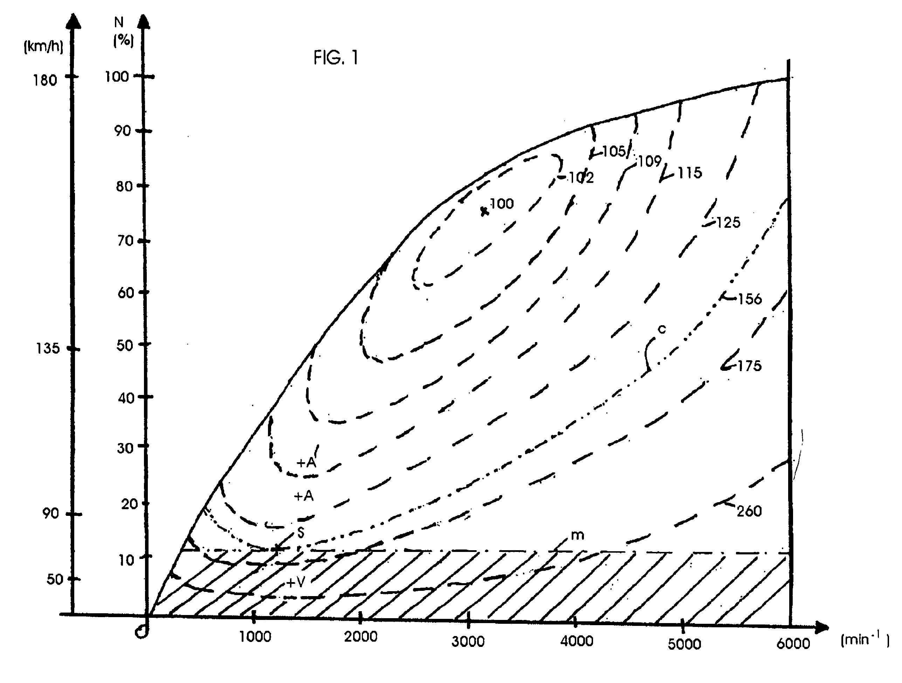

Fig. 1 zeigt schematisch ein Leistungs-Verbrauchskennfeld eines Ottomotors. Auf der Ordinate ist die Leistung N beispielsweise in Prozent der Vollleistung, oder für ein spezielles Beispiel, unmittelbar in kW angegeben. Die Abszisse gibt die Drehzahl der Brennkraftmaschine in min⁻¹ an. Die gestrichelten, muschelartigen Kurven sind Kurven gleichen spezifischen Verbrauches (g/kWh), wobei 100 den minimalen spezifischen Verbrauch (Bestpunkt) und die weiteren Zahlen den jeweiligen spezifischen Verbrauch, bezogen auf den Bestpunkt, angeben. Auf einer zweiten Ordinate sind die Geschwindigkeiten angegeben, die ein beispielhaftes Fahrzeug bei der jeweiligen Antriebsleistung auf einer ebenen Straße erreicht. Das Kennfeld eines Dieselmotors ist prinzipiell ähnlich, jedoch sind die Verbrauchszunahmen nicht so groß.

Im Folgenden wird angenommen, dass die Brennkraftmaschine zusammen mit einem Generator, einem elektrischen Antriebsmotor und einem elektrischen Energiespeicher, beispielsweise einer Batterie, in ein Fahrzeug eingebaut ist. Dabei können der Generator und der Antriebsmotor in einer Elektromaschine vereint sein. Die Brennkraftmaschine kann für den Antrieb des Fahrzeuges und/oder des Generators verwendet werden und der elektrische Antriebsmotor kann für den Antrieb des Fahrzeuges allein oder gemeinsam mit der Brennkraftmaschine verwendet werden. Der Generator liefert bei seinem Antrieb mittels der Brennkraftmaschine elektrische Energie in einen elektrischen Energiespeicher, bspw. eine Batterie. Der elektrische Antriebsmotor wird aus der Batterie und/oder ggf. unmittelbar vom Generator mit Strom versorgt. Die Übersetzungen zwischen dem Verbrennungsmotor und dem Fahrzeug sowie zwischen dem Verbrennungsmotor und dem Generator und dem Antriebsmotor und dem Generator seien vorteilhaft durch Einsatz entsprechender Getriebe weitgehend einstellbar; ebenso sei die Brennkramnaschine mit dem Fahrzeug und/oder Generator sowie der Antriebsmotor mit dem Fahrzeug beliebig kuppelbar.

Weiter wird angenommen, der Generator sei für eine mechanische Antriebsleistung von etwa 20 kW ausgelegt, wobei diese mechanische Leistung von der Brennkraftmaschine bei einer Drehzahl von 1200 min⁻¹ mit einem bestmöglichen spezifischen Verbrauch von etwa 120 erzeugt werden kann. Dieser Betriebspunkt ist in Fig. 1 mit A bezeichnet.

Weiter wird angenommen, der Generator habe einen Wirkungsgrad G von 0,95, der Antriebsmotor habe einen Wirkungsgrad M von ebenfalls 0,95 und die Batterie habe einen Lade-/Entladewirkungsgrad B (einschließlich aller Wandler- und ohmschen Verluste) von 0,85.

Unter den vorgenannten Annahmen beträgt der effektive spezifische Verbrauch ESVE, mit dem das Fahrzeug mit vom im Betriebspunkt A laufender Brennkraftmaschine und alleinigem Antrieb des Generators erzeugter, in der Batterie gespeicherter und dieser wiederum entnommener elektrischer Energie angetrieben werden kann A/(BxGxM) = 156. Die Linie, auf der die Brennkraftmaschine mit einem spezifischen Verbrauch von 156 läuft, ist in Fig. 1 gestrichelt mit doppelter Punktierung eingezeichnet (Kurve c).

Bei voller Batterie ist es somit unwirtschaftlich, das Fahrzeug mit der Brennkraftmaschine anzutreiben, sobald diese mit einem spezifischen Verbrauch höher als 156 läuft, vorausgesetzt, das elektrische Antriebssystem (Batterie und Elektromotor) kann die benötigte mechanische Antriebsleistung mit den oben genannten Wirkungsgraden liefern.

Wie aus dem Diagramm der Fig. 1 weiter ersichtlich, ist die Brennkrafunaschine, unabhängig von ihrer Drehzahl, nicht in der Lage, eine Leistung von weniger als 12 kW (Minimum S der Kurve c) mit einem spezifischen Verbrauch besser als ESVE zu liefern. Der schraffierte Bereich scheidet somit bei vollem elektrischen Energiespeicher für einen Antrieb des Fahrzeuges durch die Brennkraftmaschine vollständig aus, d.h. konstante Geschwindigkeiten auf ebener Straße bis zu etwa 70 km/h werden bei vollem elektrischen Energiespeicher ausschließlich unter Antrieb des elektrischen Antriebsmotors gefahren.

Sobald eine Vortriebsleistung von mehr als 12 kW bei vollem Energiespeicher benötigt wird, ist es wirtschaftlich, diese Vortriebsleistung mit Hilfe der Brennkraftmaschine zu erzeugen, wenn die Brennkraftmaschine dabei in einem Kennfeldpunkt oberhalb der Kurve C betrieben werden kann.

Wenn zusätzliche Vortriebsleistung erforderlich ist, beispielsweise zum Beschleunigen oder zum Befahren von Steigungen, wird die Brennkraftmaschine in einen Arbeitspunkt gesteuert, indem sie mit deutlich besserem spezifischen Verbrauch als ESVE arbeitet. Reicht die Leistung nicht, kann das Antriebsmoment des Elektromotor zugeschaltet werden.

Die vorstehenden Bedingungen gelten für den Fall, dass die in der Batterie gespeicherte Energie von der im Betriebspunkt A laufenden Brennkraftmaschine erzeugt wurde. Die Verhältnisse ändern sich, wenn der Energiespeicher bzw. die Batterie nachgeladen werden kann.

Wie aus Fig. 1 ersichtlich, kann die Brennkraftmaschine bei einem Vortriebsleistungsbedarf von beispielsweise 5 kW und einer Drehzahl von 1200 min⁻¹ (Punkt V) durch zusätzlichen Antrieb des Generators mit einer Antriebsleistung von 20 kW auf den Betriebspunkt A' gebracht werden, bei der sie 25 kW mit einem spezifischen Verbrauch von weniger als 115 erzeugt. Bei möglicher Generatorlast ist es also zweckmäßig, die Brennkraftmaschine für den Vortrieb des Fahrzeuges zu nutzen, auch wenn die benötigte Vortriebsleistung gering ist, unter der Voraussetzung, dass die Brennkraftmaschine dann mit einem spezifischen Verbrauch geringer als im Betriebspunkt A läuft. Wenn die Batterie von einer im Betriebspunkt A' laufenden Brennkraftmaschine nachgeladen wird, kann das Fahrzeug elektrisch mit einem effektiven Verbrauch ESVE = A' /(BxGxM) = 126 betrieben werden.

Aus dem Vorstehenden wird ersichtlich, dass es generell bei voller Batterie zweckmäßig ist, die Brennkraftmaschine ausschließlich zum Antrieb des Fahrzeuges nur dann einzusetzen, wenn sie in einem Betriebsbereich, in dem an sich auch mit nur elektromotorischen Antrieb gefahren werden könnte, mit einem spezifischen Kraftstoffverbrauch kleiner als ESVE = ESVL /(BxGxM) ist, wobei ESVL der effektive bzw. mittlere spezifische Kraftstoffverbrauch ist, mit dem die Antriebsenergie des Generators zum Laden der Batterie erzeugt wurde. Es versteht sich, dass ESVL durch Energierückgewinnung beim Bremsen des Fahrzeugs mittels des Generators gesenkt wird.

Unter Wirkungsgradgesichtspunkten ist es zweckmäßig, die Batterie dann nachzuladen, wenn die den Generator und gegebenenfalls das Fahrzeug antreibende Brennkraftmaschine im Zeitpunkt (im dargestellten Beispiel) mit etwa 3200⁻¹ min und eine Leistung von etwa 75 % der Maximalleistung läuft. Dies ist je nach Nennantriebsleistung des Generators und erforderlicher Antriebsleistung des Fahrzeugs nur in begrenztem Fahrzuständen möglich. Die Nennantriebsleistung des Generators ist diejenige Antriebsleistung, bei der der Generator seine Nennleistung als elektrische Leistung abgibt, d. h. auf die er und das nachgeschaltete elektrische System, wie Gleichstrom/Wechselstrom-Wandler, elektrische Leistungen und Batterie ausgelegt sind. Die Nennleistung entspricht im Allgemeinen derjenigen Leistung, bei der das System ohne deutliche ohmsche Verluste arbeitet. Die Dauerstromstärken liegen bspw. zwischen 50 und 100 A, wobei kurzzeitige Überlastungen möglich sind. Wie aus der Fig. 1 ersichtlich ist, sinkt der spezifische Verbrauch der Brennkraftmaschine i. A. durch die zusätzliche Antriebsleistung für den Generator um so stärker, je niedriger die Drehzahl und die Leistung der Brennkraftmaschine ist. Durch Beeinflussung der Ventildrehzeiten der Brennkraftmaschine ist es möglich, die Kurven des gleichen spezifischen Verbrauchs so zu gestalten, dass links des Bestpunlctes schräg nach links oben und rechts des Bestpunktes schräg nach rechts unten die Kurve maximale Leistung einmünden.

Da die Kurve c von dem spezifischen Verbrauch der Brennkraftmaschine beim Nachladen der Batterie abhängt, ist es zweckmäßig, diesen während der Nachladung der Batterie den zu erfassen und daraus den effektiven spezifischen Verbrauch ESVE zu errechnen, mit dem dann aus der Batterie gefahren werden kann.

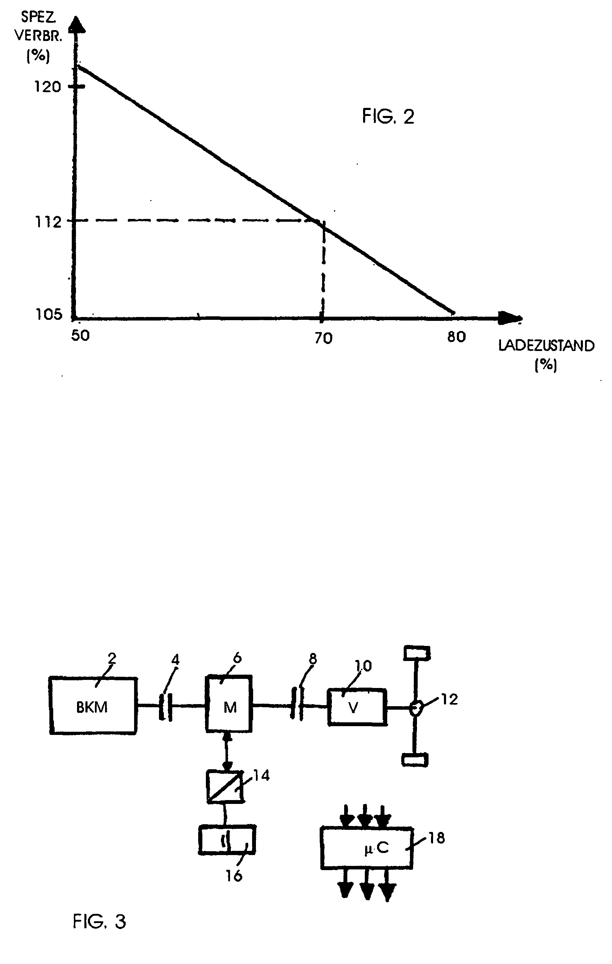

Damit im Bedarfsfall, d.h. insbesondere zum Anlassen der Brennkraftmaschine, Energie aus der Batterie zur Verfügung steht, ist es zweckmäßig, den Ladezustand der Batterie nicht unter einen vorbestimmten Wert fallen zulassen. Eine vorteilhafte Ladestrategie besteht darin, dass der spezifische Verbrauch der Brennkraftmaschine, bei dem nachgeladen wird, umso geringer ist, je mehr Energie noch in der Batterie ist. Dies ist in Fig. 2 dargestellt.

Die Ordinate zeigt den spezifischen Verbrauch, mit dem die Brennkraftmaschine läuft, wenn sie den Generator und gegebenenfalls zusätzlich das Fahrzeug antreibt. Die Abszisse gibt den Ladezustand der Batterie an. Die eingezeichnete Gerade, die auch eine gekrümmte Kurve sein kann, gibt den jeweiligen Ladezustand der Batterie, bei dem nachgeladen wird, abhängig von dem spezifischen Verbrauch an. Das gestrichelt eingetragene Beispiel besagt; dass bei einem Ladezustand der Batterie von 70 % nur dann nachgeladen wird, wenn dies mit einem spezifischen Verbrauch der Brennkraftmaschine unter 112 möglich ist. Es versteht sich, dass eine solche Ladestrategie mit für stabile Schaltzustände ausreichender Hysterese gefahren wird, d. h. ein jeweiliger Ladezustand kurzzeitig beibehalten wird, auch wenn das Entscheidungskriterium durch Betrieb der Brennkraftmaschine in einen anderen Lastpunlct, bspw. durch Gasgeben oder Gaswegnehmen verletzt ist. Wenn das Fahrzeug häufig auf einer vorbestimmten Strecke betrieben wird, beispielsweise bei der täglichen Fahrt in die Arbeit, kann an einem bspw. von einem Fahrer aktivierten Lernmode das erforderliche Antriebsleistungsprofil des Fahrzeuges von Sensoren erfasst werden und in einer Speichereinrichtung abgelegt werden. Eine Recheneinheit kann aus dem Antriebsleistungs-/Streckenprofil, dem Verbrauchskernfeld der Brennkraftmaschine, den vorhandenen Übersetzungsmöglichkeiten zwischen dem Fahrzeug, der Brennkraftmaschine, dem Generator und dem Antriebsmotor eine Steuerung der Brennkraftmaschine, des Generators und des Motors und möglicher Getriebe und Kupplungen derart errechnen, dass die Strecke unter zweckmäßigem Einsatz der drei genannten Komponenten verbrauchsoptimal durchfahren wird, wobei eine Randbedingung beispielsweise darin bestehen kann, dass die Batterie am Ende der Strecke zumindest weitgehend voll ist. Für diese Optimierungsrechnung wird bspw. im Lernmode der Geschwindigkeitsverlauf über die wiederholt durchfahren Strecke gespeichert und daraus der zeitliche Geschwindigkeitsverlauf bzw. der zeitliche Verlauf des Antriebsleistungsbedarfs und der Bremsleistung ermittelt. Aus dem Geschwindigkeitsverlauf und dem Leistungsverlauf können anhand der möglichen Übersetzungen der Verlauf der durchfahrenen Betriebspunkte der Brennkraftmaschine unter Berücksichtigung des Betriebs des Generators und des Antriebsmotors und damit des Ladezustandes der Batterie unter Optimierung des Gesamtverbrauches und Vorgabe des Batterieladezustandes am Anfang und Ende der durchfahrene Strecke errechnet werden.

Es ist zweckmäßig die Höchstleistung der Brennkraftmaschine derart auszulegen, dass die Brennkraftmaschine zum alleinigen Antrieb des Fahrzeuges bei dessen Dauerhöchstgeschwindigkeit geeignet ist (im dargestellten Beispiel 100 kW für 180 km/h).

Bezüglich des Generators ist es zweckmäßig, dessen Nennantriebsleistung derart auszulegen, dass sie mindestens derjenigen maximalen Leistung entspricht, die die Brennkraftmaschine bei einem vorgegebenen spezifischen Verbrauch A und der dabei geringstmöglichen Drehzahl abgibt. Besonders vorteilhaft ist es, die Generatornennantriebsleistung derart auszulegen, dass sie etwa der Leistung entspricht, die Brennkraftmaschine bei ihrer geringstzulässigen Lastdrehzahl maximal abgibt, im dargestellten Beispiel bei 1200 min⁻¹ etwa 40 kW. Auf diese Weise ist gewährleistet, dass auch bei lang andauerndem geringem Vortriebsbedarf bspw. im Stadtverkehr die Batterie mit hoher Effizienz nachgeladen werden kann. Eine Auslegung des Generators auf höhere Nennleistung erfordert eine größere und damit teuere Auslegung des gesamten elektrischen Systems einschließlich der Batterie, hat jedoch den Vorteil, dass rascher und mit noch geringerem spezifischen Verbrauch der Brennkraftmaschine nachgeladen werden kann. Die Minderung des spezifischen Verbrauches durch zusätzliche Belastung der Brennkraftmaschine nimmt jedoch, wie aus Fig. 1 ersichtlich, von links unten nach rechts oben ab.

Vorteilhaft ist, die Nennleistung des elektrischen Antriebsmotors auf die Nennleistung des Generators abzustimmen, damit die bei Nennbelastung des Generators in die Batterie eingespeiste Stromstärke etwa so groß ist, wie die unter Nennleistung des Motors der Batterie entnommene Stromstärke.

Bei Antrieb des Generators und/oder Motors (Umschalten auf generatorischen Betrieb) beim Bremsen des Fahrzeugs kann das elektrische System kurzfristig überlastet werden, sodass die kinetische Energie des Fahrzeugs wirkungsvoll in der Batterie gespeichert werden kann.

Im Folgenden werden anhand der Fig. 3 bis 5 beispielhafte Hybridantriebssysteme erläutert, diesbezüglich möglicher Übersetzungen u. a. m. verschiedenen Einschränkungen unterworfen sind.

Fig. 3 zeigt ein Hybridsystem, wie es in seinem Aufbau ähnlich aus der DE 29 43 554 A1 bekannt ist. Eine Brennkraftmaschine 2 ist über eine erste Kupplung 4 mit einer Elektromaschine 6 verbunden, die wiederum über eine zweite Kupplung 8 mit einem Getriebe 10, vorteilhafterweise einem automatischen Getriebe, bevorzugt einem Getriebe mit kontinuierlich veränderlicher Übersetzung, beispielsweise einem Kegelscheibenumschlingungsgetriebe, verbunden ist, von dem aus ein Differential 12 antreibbar ist, das zu angetriebenen Rädern des Fahrzeuges führt. Die Verbindungseinrichtung gemäß dem Anspruch 1 enthält somit die beiden Kupplungen 4 und 8 und das Getriebe 10.

Die Elektromaschine 6 kann sowohl als Generator als auch als Motor betrieben werden, und ist über eine elektronisch ansteuerbare Wandlereinheit 14 (Spannungswandler, Phasenansteuerung) mit einem elektrischen Energiespeicher 16, vorteilhafterweise einer elektrochemischen Batterie und/oder einem oder mehreren Superkondensatoren verbunden.

Die Brennkraftmaschine 2 ist vorteilhafterweise derart ausgelegt, dass ein Großteil ihres Massenträgheitsmoment in die Elektromaschine 6 integriert ist, so dass die Brennkraftmaschine 2 mit geringer Leistung rasch anlassbar ist. Die Kupplung 4 kann eine einfache Mitnehmerkupplung sein. Die Kupplung 8 ist beispielsweise eine elektrisch ansteuerbare Anfahrkupplung, sie kann. jedoch als Wandler ausgebildet sein.

Zur Steuerung der in ihrem Aufbau an sich bekannten Komponenten (die elektrischen Komponenten können beispielsweise ähnlich aufgebaut sein, wie in der WO 00/15455 beschrieben) dient eine mit einem Mikroprozessor und zugehörigen Speichern ausgerüstete Steuereinrichtung 18, deren Eingänge mit nicht im Einzelnen dargestellten Sensoren, wie einem Drehzahlsensor, einem Lastsensor und einem Temperatursensor der Brennkraftmaschine 2, einem Sensor zum Erfassen der Stellung der Kupplung 4, Sensoren zur Erfassung der Drehzahl der Elektromaschine 6 sowie des Stromflusses zwischen der Elektromaschine 6 und dem Energiespeicher 16, einem Sensor zur Erfassung der Stellung der Kupplung 8 sowie einen Sensor zur Erfassung der Übersetzung des Getriebes 10, einem Sensor zur Erfassung einer Raddrehzahl des Fahrzeuges sowie einem Sensor zur Erfassung der Stellung eines Fahrpedals, über das der Fahrer signalisiert, dass die Antriebsleistung des Fahrzeugs vergrößert oder verkleinert werden soll. Ausgänge der Steuereinrichtung 18 sind mit Aktoren zur Steuerung des Betriebes der Brennkraftmaschine 2, der Kupplungen 4 und 8 sowie des Getriebes 10 und der Wandlereinheit 14 zur Steuerung des Betriebes der Elektromaschine 6 verbunden.

Das in seiner Grundstruktur beschriebene Hybridantriebssystem gemäß Fig. 3 ist einfach aufgebaut und gestattet bei ausreichender Übersetzungsspreizung einen Betrieb des Fahrzeuges bei 30 km/h und einer minimalen Lastdrehzahl von 1000 min⁻¹. Die Batterie kann beispielsweise bei stehendem Fahrzeug (Kupplung 8 geöffnet) entsprechend den Bedingungen der Fig. 1 nachgeladen werden, so dass ein Schwachlastbetrieb rein elektrisch möglich ist, wobei bei einer Auslegung der Elektromaschine 6 auf eine Nennleistung von 30 bis 40 kW entsprechend hohe Leistungen elektrisch bereitgestellt werden können und die Batterie auch im Stadtverkehr von der mit spezifischen Verbräuchen um 120 laufenden Brennkraftmaschine nachgeladen werden kann. Bei stärkerer Auslegung des Generators sind noch geringere spezifische Verbräuche möglich. Insgesamt kann damit ein Betrieb der Brennkraftmaschine in Betriebsbereichen, bei denen der spezifische Verbrauch höher als 120 liegt, vermieden werden. Dies bedeutet eine ganz erhebliche Verbrauchseinsparung gegenüber konventionellen Fahrzeugen, die bei Schwachlast (Stadtverkehr) mit spezifischen Verbräuchen über 200 oder sogar 300 betrieben werden.

Eine Eigenart des Antriebssystems gemäß Fig. 3 liegt darin; dass die Brennkraftmaschine 2, die bei geringem Antriebsenergiebedarf des Fahrzeugs weitgehend stillsteht, von der Elektromaschine 6 durch Schließen der Kupplung 4 angelassen wird, was bei gleichzeitig geschlossener Kupplung 8 mit einer unangenehmen Verzögerung für die Fahrzeuginsassen verbunden sein kann. Dieser kurzzeitigen Verzögerung während des Anlassens kann dadurch entgegengewirkt werden, dass ein möglichst großer Teil des Trägheitsmoments der Brennkraftmaschine 2 in die Elektromaschine 6 gelegt wird. Zusätzlich kann diese Verzögerung elektronisch ausgeregelt werden, indem die Elektromaschine 6 beim Schließen der Kupplung 4 entsprechend der kurzzeitigen Leistungsaufnahme der Brennkraftmaschine 2 mit höherer Antriebsleistung betrieben wird, und oder dass die erste Kupplung 8 etwas geöffnet wird, so dass die das Fahrzeug antreibende Elektromaschine 6 schneller läuft, und beim anschließenden, bevorzugt gleichzeitigen Schließen der Kupplungen 4 und 8 abgebremst wird, so dass die freiwerdende Rotationsenergie der Elektromaschine 6 zum Antreiben der Brennkraftmaschine 2 genutzt werden kann, und/oder dass erfindungsgemäß die Übersetzung des Getriebes 10, das dann ein Getriebe mit kontinuierlich veränderbarer Übersetzung ist, von der Steuereinrichtung 18 gesteuert, kurzzeitig während des Schließens der Kupplung 4 ins Lange verändert wird, so dass die freiwerdende Rotationsenergie der Elektromaschine 6 für das Anlassen der Brennkraftmaschine 2 zur Verfügung steht.

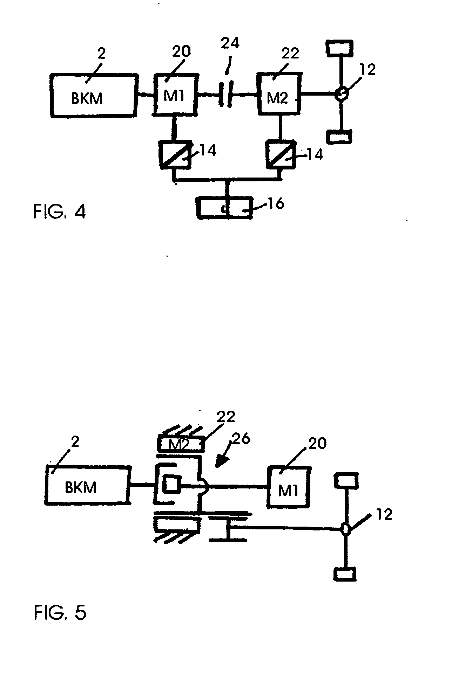

Fig. 4 zeigt eine weitere Ausführungsform eines Hybridsystems, wie es in seinem Aufbau bspw. Aus dem japanischen Gebrauchsmuster 2-7702 bekannt ist. Dieses Hybridsystem enthält zwei Elektromaschinen 20 und 22, zwischen denen eine Kupplung 24 angeordnet ist. Jeder der Elektromaschinen 20 und 22 ist eine eigene Wandlereinheit 14 zugeordnet, die mit der Batterie 16 verbunden ist. Die Steuereinrichtung 18 ist nicht dargestellt.

Bei dem System gemäß Fig. 4 kann die Brennkraftmaschine 2 bei offener Kupplung 24 unabhängig von den Fahrzuständen des Fahrzeuges von der Elektromaschine 20 angelassen werden. Bei laufender Brennkraftmaschine 2 arbeitet die Elektromaschine 20 bevorzugt als Generator. Die Elektromaschine 22 arbeitet bevorzugt als Antriebsmotor und ist im dargestellten Beispiel ohne Getriebe drehfest mit dem Differential 12 verbunden.

Ein Vorteil des Systems gemäß Fig. 4 liegt darin, dass wegen der möglichen Entkopplung zwischen Brennkraftmaschine 2 und Generator 20 einerseits und Antriebsmotor 22 und Fahrzeug über die offene Kupplung 24 andererseits der Generator mit seiner Nennleistung bei entsprechend dieser Leistung niedrigst möglichem spezifischen Verbrauch der Brennkraftmaschine betrieben werden kann. Bei geschlossener Kupplung 24 besteht wegen der drehzahlstarren Verbindung zwischen Brennkraftmaschine 2 und Fahrzeug keine Möglichkeit, die Drehzahl der Brennkraftmaschine derart zu wählen, dass ein niedrigst möglicher Verbrauch bei zusätzlicher Belastung der Brennkraftmaschine mit dem Generatormoment bzw. der Generatorleistung erzielt wird. Dadurch, dass zwei Elektromaschinen vorhanden sind, kann eine sehr hohe elektrische Antriebsleistung kurzzeitig zur Verfügung gestellt werden und eine sehr hohe Abbremsung des Fahrzeuges durch gleichzeitigen generatorischen Betrieb beider Elektromaschinen erzielt werden, sofern die Wandlereinheiten 14 und die Batterie 16 die kurzzeitigen Überlastungen zulassen. Es versteht sich, dass bei dem System gemäß Fig. 3 zwischen dem auch als Generator betreibbaren Motor 22 und dem Fahrzeug ein Getriebe angeordnet sein kann.

Bei dem System gemäß Fig. 5, wie es in seinem Aufbau aus der US 5,934,395 bekannt ist, ist die Brennkraftmaschine 2 mit dem Planetenträger eines insgesamt mit 26 bezeichneten Planetengetriebes verbunden, dessen Sonnenrad mit einer ersten Elektromaschine 20 verbunden ist und dessen Hohlrad den Läufer einer zweiten Elektromaschine 22 bildet, welches Hohlrad drehfest mit dem Differential 12 verbunden ist. Die den Elektromaschinen zugeordneten Wandlereinheiten und die Steuereinrichtung sind nicht dargestellt. Die Elektromaschine 20 wird bevorzugt als Generator betrieben. Die Elektromaschine 22 wird bevorzugt als Motor betrieben.

Es sind unterschiedlichste Betriebsarten möglich. Wenn die Elektromaschine 20 im Leerlauf ist, kann das Sonnenrad frei drehen und die Brennkraftmaschine 2 hat keinerlei Einfluss auf den Fahrzeugvortrieb oder den Betrieb der Elektromaschine 20. Das Fahrzeug wird allein von der Elektromaschine 22 angetrieben.

Wenn die zweite Elektromaschine 22 frei läuft, kann die Brennkraftmaschine das Fahrzeug nur antreiben, wenn die erste Elektromaschine 20 als Generator läuft, so dass das Sonnenrad nicht frei drehen kann. Die Verteilung der Leistung der Brennkraftmaschine auf den Generator und den Fahrzeugantrieb hängt von der Leistungsaufnahme des Generators bzw. der ersten Elektromaschine 20 ab. Das gleiche gilt für die Drehzahl des Ringrades und deshalb die Geschwindigkeit des Fahrzeuges.

In einem weiteren Mode treiben die Brennkraftmaschine 2 und die zweite Elektromaschine 22 das Fahrzeug an, während die erste Elektromaschine 20 als Generator arbeitet. Insgesamt ist das System gemäß Fig. 4 regelungstechnisch verhältnismäßig aufwendig. Auch das Anlassen der Brennkraftmaschine 2 ist regelungstechnisch aufwendig, da eine Leistungsaufnahme der Brennkraftmaschine 2 Auswirkungen auf den Vortrieb des Fahrzeuges hat, der ausgeregelt werden muss.

Die vorstehend geschilderten Hybridsysteme sind nur beispielhaft und können vielfältig abgewandelt und ergänzt werden. Beispielsweise kann das Planetengetriebe der Fig. 4 durch ein Differentialgetriebe ähnlich einem Achsdifferential ersetzt werden. Die beispielhaft geschilderten Hybridsysteme ermöglichen, dass ein Betrieb der Brennkraftmaschine im Bereich niedriger Leistungen und niedriger Lasten vermieden werden kann. Daher können vorteilhafterweise in ihrem Aufbau sehr einfache Zweitaktmaschinen eingesetzt werden, die bei herkömmlichen Einsatz unter niedriger Last und bei niedrigen Drehzahlen insbesondere Abgasprobleme haben. Des weiteren können die Brennkraftmaschinen durch geeignete Beeinflussung der Steuerzeiten (variable Ventilüberschneidungen, variable Ventiltriebe) und fehlende Volllastanfettung derart gebaut werden, dass die Muschelkurven gem. Fig. 1 unterhalb des Bestpunktes jeweils von rechts unten nach links oben in die Volllastlinie einlaufen und oberhalb des Bestpunlctes von links unten nach rechts oben, so dass bei konstanter Drehzahl mit steigender Leistung jeweils ein verminderter spezifischer Verbrauch einhergeht.

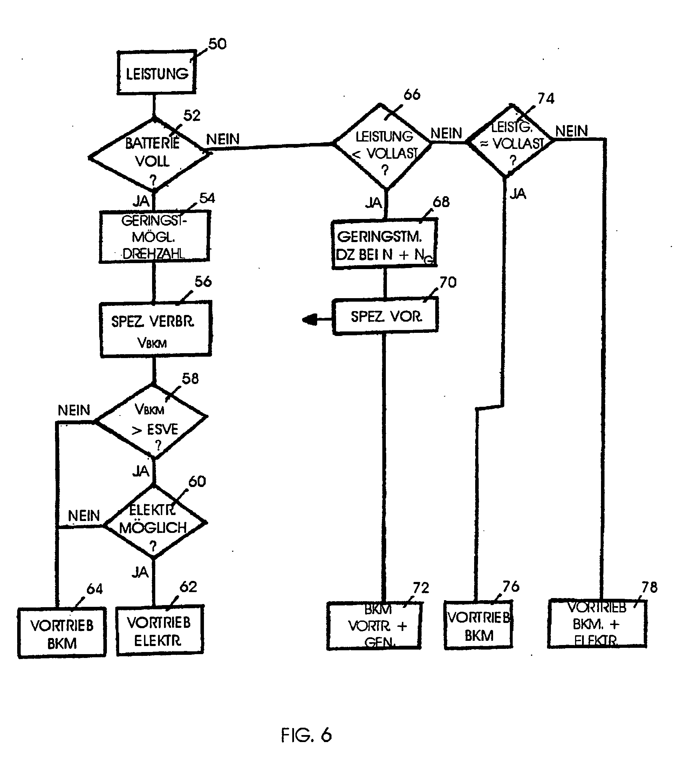

Anhand der Fig. 6 wird im Folgenden ein Flussdiagramm erläutert, nach dem die Steuereinrichtung 18 beispielsweise arbeitet:
In einem ersten Schritt 50 wird anhand der Betriebszustände der Brennkraftmaschinen und des bzw. der Elektromaschinen sowie der Fahrpedalstellung, die erforderliche Antriebsleistung des Fahrzeugs ermittelt. Im Schritt 52 wird festgestellt, ob die Batterie voll ist. Ist dies der Fall, so wird im Schritt 54 anhand des Diagramms der Fig. 1 die geringstmögliche Drehzahl ermittelt, bei der die Brennkraftmaschine unter Berücksichtigung der jeweils möglichen Übersetzungen laufen kann, um die erforderliche Leistung bereitzustellen. Im Schritt 56 wird dann der spezifische Verbrauch der Verbrennungsmaschine unter den Bedingungen der Schritte 50, 54 ermittelt. Im Schritt 58 wird ermittelt, ob der spezifische Verbrauch VBKM größer ist als der effektive spezifische Verbrauch ESVE, mit dem aus der Batterie gefahren werden kann. Ist dies der Fall, so wird im Schritt 60 ermittelt, ob ein elektrischer Betrieb möglich ist, d.h. die Leistung elektrisch bereitgestellt werden kann. Ist dies der Fall, so wird im Schritt 62 auf elektrischen Vortrieb geschaltet. Liegt das Kriterium des Schrittes 58 oder des Schrittes 60 nicht vor, so wird unter Antrieb der Brennkraftmaschine gefahren (Schritt 64).

Wird im Schritt 52 festgestellt, dass die Batterie nachgeladen werden kann, so wird im Schritt 66 festgestellt, ob die im Schritt 50 ermittelte Leistung kleiner ist als die Volllastleistung der Brennkraftmaschine unter den gegebenen möglichen Übersetzungsverhältnissen. Ist dies der Fall, so wird im Schritt 68 die geringstmögliche Drehzahl ermittelt, unter der die Brennkraftmaschine die Schritt 50 erforderliche Leistung zuzüglich der Nennleistung des Generators erzeugen kann. Im Schritt 70 wird der spezifische Verbrauch unter den Bedingungen der Schritte 15 und 68 ermittelt. Es versteht sich, dass im Schritt 66 ermittelt werden muss, dass die Leistung im Schritt 50 genügend weit unter der Volllastleistung liegt, so dass der Schritt 68 sinnvoll vollzogen werden kann. Nach dem Schritt 70 schaltet das System auf verbrennungsmotorischen Antrieb unter zusätzlicher Ladung der Batterie mit Hilfe des Generators. Der im Schritt 70 ermittelte spezifische Verbrauch wird der Steuereinrichtung zugeführt, der auch die vom Generator erzeugte Leistung zugeführt wird, so dass der spezifische Verbrauch ESVL ermittelt werden kann, mit dem die in der Batterie befindliche Energie erzeugt wird.

Wird im Schritt 66 "nein" festgestellt, so wird im Schritt 74 überprüft, ob die Leistung gemäß Schritt 50 annähernd im Bereich der Volllastleistung bei jeweiligen Drehzahl liegt. Ist dies der Fall, so wird im Schritt 76 auf Antrieb nur durch die Brennkraftmaschine geschaltet.

Wird im Schritt 76 "nein" festgestellt, so bedeutet das, dass zusätzlich zum Antrieb durch die Brennkraftmaschine elektrischer Antrieb erforderlich ist, so dass im Schritt 78 beide Antriebsarten aktiviert werden.

Es versteht sich, dass das Flussdiagramm gemäß Fig. 6 nur beispielhaft ist und je nach Hybridantriebskonzept unterschiedlichste Abwandlungen möglich sind.

Insgesamt wird mit der Erfindung ein Weg aufgezeigt, wie durch Hybridantriebssysteme der Kraftstoffverbrauch von Fahrzeugen außerordentlich stark gesenkt werden kann. Die Verbrauchssenkung ist um so größer, je stärker die Brennkraftmaschine im Vergleich zu der im vorwiegend gefahrenen Teillastbetrieb erforderlichen Antriebsleistung des Fahrzeugs ist. Eine vorteilhafterweise in die Steuereinrichtung 18 integrierte Ladezustandserkennung kann bspw. Nach dem Prinzip arbeiten, dass die in der Batterie befindliche Energie aus der jeweiligen Differenz der vom Generator in die Batterie geladenen Energie und der von dem Motor aus der Batterie entnommenen Energie ermittelt wird oder dass direkt die Strombilanz der Batterie ermittelt wird. Je nach Bauart der Batterie kann die Maximalladung und die Minimalladung der Batterie angepasst werden.

### Bezugszeichenliste

- 2: Brennkraftmaschine
- 4: erste Kupplung
- 6: Elektromaschine
- 8: zweite Kupplung
- 10: Getriebe
- 12: Differential
- 14: Wandlereinheit
- 16: Energiespeicher
- 18: Steuereinrichtung
- 20: Elektromaschine
- 22: Elektromaschine
- 24: Kupplung
- 26: Planetengetriebe

## Patentansprüche

1. Hybridantriebssystem für ein Fahrzeug, welches Hybridantriebssystem enthält
eine Brennkraftmaschine (2), eine als Motor und Generator betreibbare Elektromaschine (6), ein Getriebe (10) mit kontinuierlich veränderbarer Übersetzung, das mit einer Antriebswelle des Fahrzeugs verbunden ist, eine erste Kupplung (4), über die die Brennkraftmaschine (2) mit der Elektromaschine (6) verbunden ist, eine zweite Kupplung (8), über die die Elektromaschine mit dem Getriebe (10) verbunden ist, einen elektrischen Energiespeicher (16), eine Wandlereinrichtung (14) zum Steuern des Energieflusses zwischen der Elektromaschine und dem elektrischen Energiespeicher und eine elektronische Steuereinrichtung (18) zum Steuern der Brennkraftmaschine, des Getriebes, der Wandlereinrichtung und der Kupplungen abhängig vom Ladezustand des elektrischen Energiespeichers und dem Antriebsleistungsbedarf des Fahrzeugs, welche Steuereinrichtung (18) ein Anlassen der Brennkraftmaschine bei zumindest teilweise geschlossener zweiter Kupplung (8) über das Schließen der ersten Kupplung (4) steuert und beim Anlassen der Brennkraftmaschine (2) die Übersetzung des Getriebes (10) während des Schließens der ersten Kupplung (4) verkleinert.

2. Hybridantriebssystem nach Anspruch 1, **dadurch gekennzeichnet dass** die Elektromaschine (6) beim Anlassen der Brennkraftmaschine (2) während des Schließens der ersten Kupplung (4) mit zusätzlichem Antriebsmoment betrieben wird.

3. Hybridantriebssystem nach Anspruch 1 oder 2, **dadurch gekennzeichnet, dass** die Steuereinrichtung (18) die Wandlereinrichtung (14) und gegebenenfalls die Kupplungen (4, 8) derart steuert, dass die Brennkraftmaschine (2) ausschließlich zum Antrieb des Fahrzeugs nur eingesetzt wird, wenn Sie in einem Betriebsbereich, in dem auch mit nur elektromotorischen Antrieb gefahren werden könnte, mit einem spezifischen Kraftstoffverbrauch ESVE kleiner als ESVL /(GxBxM) und
ESVL = effektiver spezifischer Verbrauch, mit dem der Generator beim Laden der im elektrischen Energiespeicher befindlichen Energie angetrieben wurde,
G = Wirkungsgrad, mit dem der Generator die mechanische Antriebsleistung in elektrische Leistung umwandelt,
B = Wirkungsgrad, mit dem die in Generator erzeugte elektrische Leistung als Energie im elektrischen Energiespeicher gespeichert und dem Antriebsmotor zuführbar ist und
M = Wirkungsgrad, mit dem im Antriebsmotor elektrische Energie in mechanische Energie umwandelbar ist.

4. Hybridantriebssystem nach Anspruch 1 oder 2, **dadurch gekennzeichnet, dass** die Steuereinrichtung (18) die Wandlereinrichtung (14) und gegebenenfalls die Kupplungen (4, 8) derart steuert, dass zumindest bei voller Batterie (16) das Fahrzeug nur von dem Elektromotor (10; 22) angetrieben wird, wenn der jeweilige Antriebsleistungsbedarf des Fahrzeugs von der Brennkraftmaschine (2) nur mit einem spezifischen Verbrauch größer als ESVL / (GxBxM) erbracht werden kann, wobei ESVL = effektiver spezifischer Verbrauch, mit dem der Generator beim Laden der im elektrischen Energiespeicher befindlichen Energie angetrieben wurde,
G = Wirkungsgrad, mit dem der Generator die mechanische Antriebsleistung in elektrische Leistung umwandelt,
B = Wirkungsgrad, mit dem die in Generator erzeugte elektrische Leistung als Energie im elektrischen Energiespeicher gespeichert und dem Antriebsmotor zuführbar ist und
M = Wirkungsgrad, mit dem im Antriebsmotor elektrische Energie in mechanische Energie umwandelbar ist.

5. Hybridantriebssystem nach Anspruch 1 oder 2, **dadurch gekennzeichnet, dass** die Steuereinrichtung (18) die Wandlereinrichtung (14) und gegebenenfalls die Kupplungen (4, 8) derart steuert, dass ein vorbestimmter Ladezustand des elektrischen Energiespeichers (16) nicht unterschritten wird und bei abnehmenden Ladezustand des Energiespeichers der Energiespeicher vom von der Brennkraftmaschine angetriebenen Generator (6) auch dann geladen wird, wenn die Brennkraftmaschine in einem Betriebsbereich läuft, in dem ihr spezifischer Verbrauch zunehmend höher als der minimale spezifische Verbrauch ist.

6. Hybridantriebssystem nach Anspruch 1 oder 2, **dadurch gekennzeichnet, dass** die Steuereinrichtung (18) die Wandlereinrichtung (14) und gegebenenfalls die Kupplungen (4, 8) derart steuert, dass der Energiespeicher (16) derart geladen wird, dass die den Generator und gegebenenfalls zusätzlich das Fahrzeug antreibende Brennkraftmaschine in Betriebspunkten mit umso geringerem spezifischen Verbrauch läuft, je höher der Ladezustand des Energiespeichers ist.

7. Hybridantriebssystem nach einem der Ansprüche 1 bis 6, **dadurch gekennzeichnet, dass** die Steuereinrichtung (18) das System derart steuert, dass bei Laden des Energiespeichers (16) der Generator (6; 20; 22) möglichst nah an seine Nennleistung von der entsprechend der erforderlichen Leistungsabgabe mit geringstmöglichem spezifischen Verbrauch laufenden Brennkraftmaschine (2) angetrieben wird.

8. Hybridantriebssystem nach einem der Ansprüche 1 bis 7, **dadurch gekennzeichnet, dass** die Steuereinrichtung (18) enthält:
eine Speichereinrichtung zum Speichern eines Verbrauchskennfeldes, das den spezifischen Verbrauch der Brennkraftmaschine (2) abhängig von der Leistung und der Drehzahl der Brennkraftmaschine angibt,
eine weitere Speichereinrichtung, in der der jeweilige Wert von ESVE gespeichert ist, und
eine Recheneinrichtung, die aus dem aktuellen Antriebsleistungsbedarf des Fahrzeugs, der aktuellen Fahrzeuggeschwindigkeit und den verfügbaren Übersetzungen zwischen Brennkraftmaschine und Fahrzeug den minimalen spezifischen Verbrauch berechnet, mit dem die Brennkraftmaschine das Fahrzeug bei dem augenblicklichen Antriebsleistungsbedarf antreiben kann.

9. Hybridantriebssystem nach einem der Ansprüche 1 bis 8, **dadurch gekennzeichnet, dass** die Steuereinrichtung (18) eine Ladezustandserkennung zum Ermitteln des Ladezustands des Energiespeichers (16) enthält und die Brennkraftmaschine zum Antrieb des Generators (6; 20; 22) steuert, wenn der Ladezustand unter einen vorbestimmten Wert abgefallen ist.

10. Hybridantriebssystem nach einem der Ansprüche 1 bis 9, **dadurch gekennzeichnet, dass** die Steuereinrichtung (18) bei einem Antriebsleistungsbedarf des Fahrzeugs unterhalb der Nennleistung des Antriebsmotors (10; 22) die Brennkraftmaschine (2) zum Antreiben des Fahrzeugs und Generators (6; 20) steuert, wenn die Brennkraftmaschine dabei mit einem spezifischen Kraftstoffverbrauch arbeitet, der unter dem aktuellen Wert von ESVE liegt.

11. Hybridantriebssystem nach einem der Ansprüche 1 bis 10, **dadurch gekennzeichnet, dass** die Steuereinrichtung (18) eine Speichereinrichtung, in der der Antriebsleistungsbedarf des Fahrzeugs längs einer vorgebbaren Strecke speicherbar ist, und eine Recheneinrichtung enthält, die die sich längs der vorgegebenen Strecke einstellenden Betriebsarten des Hybridantriebssystems unter Minimierung des sich ergebenden Kraftstoffverbrauchs bestimmt.

12. Hybridantriebssystem nach einem der Ansprüche 1 bis 11, **dadurch gekennzeichnet, dass** die Höchstleistung der Brennkraftmaschine (2) mindestens dem Antriebsleistungsbedarf des Fahrzeugs bei Dauerhöchstgeschwindigkeit entspricht.

13. Hybridantriebssystem nach einem der Ansprüche 1 bis 12, **dadurch gekennzeichnet, dass** die Generatornennantriebsleistung derart ist, dass sie derjenigen Leistung entspricht, die die Brennkraftmaschine (2) bei einem vorbestimmten spezifischen Verbrauch und der dabei geringstmöglichen Drehzahl abgibt.

14. Hybridantriebssystem nach einem der Ansprüche 1 bis 12, **dadurch gekennzeichnet, dass** die Generatorenantriebsleistung mindestens der Leistung entspricht, die die Brennkraftmaschine (2) bei ihrer geringstzulässigen Lastdrehzahl maximal abgibt.

15. Hybridantriebssystem nach einem der Ansprüche 1 bis 14, **dadurch gekennzeichnet, dass** die Motornennleistung mindestens etwa so groß ist wie die Generatornennleistung multipliziert mit dem Produkt aus B und M.

16. Hybridantriebssystem nach einem der Ansprüche 1 bis 15, **dadurch gekennzeichnet, dass** die Brennkraftmaschine (2) eine 2-Takt-Brennkraftmaschine ist.

## Claims

1. A hybrid drive system for a vehicle, which hybrid drive system contains an internal combustion engine (2), an electric motor (6) which can be driven as a motor and generator, a transmission (10) with a continuously variable transmission ratio, which is connected to a drive shaft of the vehicle, a first coupling (4), by means of which the internal combustion engine (2) is connected to the electric motor (6), a second coupling (8), by means of which the electric motor is connected to the transmission (10), an electric energy accumulator (16), a converter device (14) to control the energy flow between the electric motor and the electric energy accumulator and an electronic control device (18) for controlling the internal combustion engine, the transmission, the converter device and the couplings depending on the load state of the electric energy accumulator and the drive output requirement of the vehicle, which control device (18) controls starting up of the internal combustion engine with the second coupling (8) at least partially closed by means of the closing of the first coupling (4) and when starting the internal combustion engine (2) reduces the transmission ratio of the transmission (10) while closing the first coupling (4).

2. A hybrid drive system according to claim 1, **characterised in that** the electric motor (6) is operated with additional drive torque when starting the internal combustion engine (2) while closing the first coupling (4).

3. A hybrid drive system according to claim 1 or 2, **characterised in that** the control device (18) controls the converter device (14) and optionally the couplings (4, 8) in such a way that the internal combustion engine (2) is exclusively used to drive the vehicle only if it is in an operating range, in which driving could also take place only with an electric motor drive, with a specific fuel consumption ESVE of less than ESVL / (G x B x M) and
ESVL = effective specific consumption, with which the generator was driven when charging the energy located in the electric energy accumulator,
G = efficiency, with which the generator converts the mechanical drive output into electric output,
B = efficiency, with which the electric output generated in the generator is stored as energy in the electric energy accumulator and can be supplied to the drive motor and
M = efficiency, with which, in the drive motor, electric energy can be converted to mechanical energy.

4. A hybrid drive system according to claim 1 or 2, **characterised in that** the control device (18) controls the converter device (14) and optionally the couplings (4, 8) in such a way that at least with a fully battery (16), the vehicle is only driven by the electric motor (10; 22), if the respective drive output requirement of the vehicle can be provided by the internal combustion engine (2) only with a specific consumption greater than
ESVL / (G x B x M), wherein ESVL = effective specific consumption, with which the generator was driven when charging the energy located in the electric energy accumulator,
G = efficiency, with which the generator converts the mechanical drive output into electric output,
B = efficiency, with which the electric output generated in the generator is stored as energy in the electric energy accumulator and can be supplied to the drive motor and
M = efficiency, with which, in the drive motor, electric energy can be converted to mechanical energy.

5. A hybrid drive system according to claim 1 or 2, **characterised in that** the control device (18) controls the converter device (14) and optionally the couplings (4, 8) in such a way that a predetermined charge state of the electric energy accumulator (16) is not fallen below and with a reducing charge state of the energy accumulator, the energy accumulator is also charged by the generator (6) driven by the internal combustion engine if the internal combustion engine runs in an operating range, in which its specific consumption is increasingly higher than the minimum specific consumption.

6. A hybrid drive system according to claim 1 or 2, **characterised in that** the control device (18) controls the converter device (14) and optionally the couplings (4, 8) in such a way that the energy accumulator (16) is charged in such a way that the internal combustion engine driving the generator and optionally also the vehicle runs at operating points with a lower specific consumption, the higher the charge state of the energy accumulator.

7. A hybrid drive system according to any one of claims 1 to 6, **characterised in that** the control device (18) controls the system in such a way that when charging the energy accumulator (16), the generator (6; 20; 22) is driven as close as possible to its nominal output by the internal combustion engine (2) running according to the required output delivery with the lowest possible specific consumption.

8. A hybrid drive system according to any one of claims 1 to 7, **characterised in that** the control device (18) contains:
a memory device for storing a characteristic consumption map which gives the specific consumption of the internal engine (2) depending on the output and the rotational speed of the internal combustion engine,
a further memory device, in which the respective value of ESVE is stored and
a computing device, which calculates from the current drive output requirement of the vehicle, the current vehicle speed and the available transmission ratios between the internal combustion engine and the vehicle, the minimum specific consumption with which the internal combustion engine can drive the vehicle at the instantaneous drive output requirement.

9. A hybrid drive system according to any one of claims 1 to 8, **characterised in that** the control device (18) contains a charge state recognition mechanism for determining the charge state of the energy accumulator (16) and controls the internal combustion engine to drive the generator (6; 20; 22), if the charge state has fallen below a predetermined value.

10. A hybrid drive system according to any one of claims 1 to 9, **characterised in that** the control device (18) controls the internal combustion engine (2) to drive the vehicle and generator (6; 20) in the event of a drive output requirement of the vehicle below the nominal output of the drive motor (10; 22), if the internal combustion engine operates, in this case, at a specific fuel consumption which is below the current value of ESVE.

11. A hybrid drive system according to any one of claims 1 to 10, **characterised in that** the control device (18) contains a memory device, in which the drive output requirement of the motor vehicle along a predeterminable path can be stored, and contains a computing device, which determines the operating modes of the hybrid drive system adjusted along the predetermined path while minimising the fuel consumption being produced.

12. A hybrid drive system according to any one of claims 1 to 11, **characterised in that** the maximum output of the internal combustion engine (2) corresponds at least to the drive output requirement of the vehicle at continuous maximum speed.

13. A hybrid drive system according to any one of claims 1 to 12, **characterised in that** the generator drive output is such that it corresponds to the output which the internal combustion engine (2) delivers at a predetermined specific consumption and the minimum possible rotational speed in this case.

14. A hybrid drive system according to any one of claims 1 to 12, **characterised in that** the generator drive output corresponds at least to the output which the internal combustion engine (2) maximally delivers at the lowest permissible load speed.

15. A hybrid drive system according to any one of claims 1 to 14, **characterised in that** the nominal motor output is at least approximately as large as the nominal generator output multiplied by the product of B and M.

16. A hybrid drive system according to any one of claims 1 to 15, **characterised in that** the internal combustion engine (2) is a two-stroke internal combustion engine.

## Revendications

1. Système d'entraînement hybride pour un véhicule, comprenant un moteur à combustion interne (2), un moteur électrique (6) fonctionnant comme moteur et comme générateur, une transmission (10) à rapport de transmission variable en continu, reliée à l'arbre d'entraînement du véhicule, un premier embrayage (4) reliant le moteur à combustion interne (2) à la machine électrique (6), un second embrayage (8) reliant la machine électrique à la transmission (10), un accumulateur d'énergie électrique (16), une installation de conversion (14) pour commander le transfert d'énergie entre la machine et électrique et l'accumulateur d'énergie électrique et une installation de commande électronique (18) pour commander le moteur à combustion interne, la transmission, l'installation de conversion et les embrayages en fonction de l'état de charge de l'accumulateur d'énergie électrique et de la demande de puissance motrice du véhicule,
au démarrage du moteur à combustion interne, le second embrayage (8) étant partiellement fermé, l'installation de commande (18) assure la fermeture du premier embrayage (4), et
au démarrage du moteur à combustion interne (2) elle diminue le rapport de démultiplication de la transmission (10) au cours de la fermeture du premier embrayage (4).

2. Système d'entraînement hybride selon la revendication 1,
**caractérisé en ce qu'**
au démarrage du moteur à combustion interne (2), pendant la fermeture du premier embrayage (4), la machine électrique (6) fonctionne avec un couple d'entraînement supplémentaire.

3. Système d'entraînement hybride selon la revendication 1 ou 2,
**caractérisé en ce que**
l'installation de commande (18) commande l'installation de conversion (14) et le cas échéant les embrayages (4 et 8) de façon que le moteur à combustion interne (2) soit exclusivement utilisé pour l'entraînement du véhicule lorsqu'il est dans une plage de fonctionnement dans laquelle l'entraînement par moteur électrique serait suffisant, avec une consommation spécifique de carburant ESVE inférieure à ESVL/(GxBxM), relation dans laquelle,
ESVL = consommation spécifique efficace pour laquelle le générateur serait entraîné lors de la charge de l'énergie électrique qui se trouve dans l'accumulateur d'énergie électrique,
G = rendement de conversion de la puissance motrice mécanique en puissance électrique dans le générateur,
B = rendement de l'accumulation de la puissance électrique générée par le générateur comme énergie dans l'accumulateur d'énergie électrique et qui est fournie au moteur, et
M = rendement selon lequel l'énergie électrique peut être convertie en énergie mécanique dans le moteur d'entraînement.

4. Système d'entraînement hybride selon la revendication 1 ou 2,
**caractérisé en ce que**
l'installation de commande (18) commande l'installation de conversion (14) et le cas échéant les embrayages (4, 8) pour qu'au moins lorsque la batterie (16) est chargée complètement, le véhicule ne soit plus entraîné que par le moteur électrique (10, 22) si la demande de puissance motrice respective du véhicule par le moteur à combustion interne (2) n'était seulement entraînée qu'avec une consommation spécifique supérieure à ESVL/(GxBxM), relation dans laquelle,
ESVL = consommation spécifique et efficace avec laquelle le générateur serait entraîné pour charger l'énergie de l'accumulateur d'énergie électrique,
G = rendement de conversion de la puissance motrice mécanique en puissance électrique par le générateur,
B = rendement d'accumulation de la puissance électrique générée par le générateur comme énergie dans l'accumulateur d'énergie électrique et qui est fournie au moteur, et
M = rendement de conversion d'énergie électrique en énergie mécanique dans le moteur.

5. Système d'entraînement hybride selon la revendication 1 ou 2,
**caractérisé en ce que**
l'installation de commande (18) commande l'installation de conversion (14) et le cas échéant les embrayages (4, 8) pour ne pas descendre en dessous d'un état de charge prédéfini dans l'accumulateur d'énergie électrique (16) et que, lorsque l'état de charge de l'accumulateur d'énergie diminue, celui-ci soit également chargé par le générateur (6) entraîné par le moteur à combustion interne lorsqu'il fonctionne dans une plage dans laquelle sa consommation spécifique est de façon croissante supérieure à la consommation spécifique minimale.

6. Système d'entraînement hybride selon la revendication 1 ou 2,
**caractérisé en ce que**
l'installation de commande (18) commande l'installation de conversion (14) et le cas échéant les embrayage (4, 8) de façon que l'accumulateur d'énergie (16) soit chargé, que le moteur à combustion interne qui entraîne le générateur et le cas échéant aussi le véhicule automobile, fonctionne avec une consommation spécifique d'autant plus faible que l'état de charge de l'accumulateur d'énergie est élevé.

7. Système d'entraînement hybride selon les revendications 1 à 6,
**caractérisé en ce que**
l'installation de commande (18) commande le système de façon qu'en chargeant l'accumulateur d'énergie (16), le générateur (6; 20; 22) soit entraîné aussi près que possible de sa puissance nominale par le moteur à combustion interne (2) fournissant une puissance requise avec la consommation spécifique la plus faible possible.

8. Système d'entraînement hybride selon les revendications 1 à 7,
**caractérisé en ce que**
l'installation de commande (18) comprend :
- une installation de mémoire, pour mémoriser un champ de caractéristiques de consommation qui indique la consommation spécifique du moteur à combustion interne (2) en fonction de la puissance et de la vitesse de rotation du moteur à combustion interne,
- une autre installation de mémoire, mémorisant la valeur spécifique de ESVE, et une installation de calcul qui partant de la demande actuelle de puissance motrice du véhicule, de la vitesse de déplacement actuelle du véhicule et des rapports de démultiplication disponibles entre le moteur à combustion interne et le véhicule, calcule la consommation spécifique minimale avec laquelle le moteur à combustion interne entraîne le véhicule pour la demande de puissance d'entraînement instantanée.

9. Système d'entraînement hybride selon les revendications 1 à 8,
**caractérisé en ce que**
l'installation de commande (18) comporte une détection d'état de charge pour déterminer l'état de charge de l'accumulateur d'énergie (16) et commande le moteur à combustion interne pour entraîner le générateur (6; 20; 22) lorsque l'état de charge tombera en dessous d'une valeur prédéfinie.

10. Système d'entraînement hybride selon les revendications 1 à 9,
**caractérisé en ce que**
pour une demande de puissance d'entraînement du véhicule inférieure à la puissance nominale du moteur d'entraînement (10; 22), l'installation de commande (18) commande le moteur à combustion interne (2) pour entraîner le véhicule et le générateur (6; 20) si le moteur à combustion interne fonctionne ainsi avec une consommation spécifique de carburant inférieure à la valeur actuelle de ESVE.

11. Système d'entraînement hybride selon les revendications 1 à 10,
**caractérisé en ce que**
l'installation de commande (18) comporte une installation de mémoire dans laquelle est mémorisée la demande de puissance d'entraînement du véhicule le long d'un trajet prédéfini et une installation de calcul qui définit les modes de fonctionnement s'établissant le long du trajet prédéfini pour le système d'entraînement hybride en minimisant la consommation de carburant correspondante.

12. Système d'entraînement hybride selon les revendications 1 à 11,
**caractérisé en ce que**
la puissance maximale du moteur à combustion interne (2) correspond au moins à la demande de puissance motrice du véhicule pour une vitesse maximale permanente.

13. Système d'entraînement hybride selon les revendications 1 à 12,
**caractérisé en ce que**
la puissance motrice du générateur est telle qu'elle correspond à la puissance respective que fournit le moteur à combustion interne (2) pour une consommation spécifique prédéfinie et ainsi pour une vitesse de rotation la plus faible possible.

14. Système d'entraînement hybride selon les revendications 1 à 12,
**caractérisé en ce que**
la puissance d'entraînement du générateur correspond au moins à la puissance que le moteur à combustion interne (2) fournit au maximum pour la vitesse de rotation de charge la plus faible autorisée.

15. Système d'entraînement hybride selon les revendications 1 à 14,
**caractérisé en ce que**
la puissance nominale du moteur est au moins aussi grande que la puissance nominale du générateur multipliée par le produit de B et M.

16. Système d'entraînement hybride selon les revendications 1 à 15,
**caractérisé en ce que**
le moteur à combustion interne (2) est un moteur à combustion interne à 2-temps.
